# FASCICULE DE BREVET EUROPEEN

(11) **EP 2 935 287 B1**
(45) Date de publication et mention de la délivrance du brevet: **14.12.2016**
(21) Numéro de dépôt: 13820827.7
(22) Date de dépôt: 19.12.2013
(51) Int. Cl.: C07F 7/08

(54) **PROCÉDÉ D'HYDROSILYLATION D'UN SILOXANE PHOTOCATALYSÉ PAR UN COMPOSÉ POLYOXOMÉTALLATE**
VERFAHREN ZUR HYDROSILYLIERUNG EINES DURCH EINE POLYOXOMETALATVERBINDUNG PHOTOKATALYSIERTEN SILOXANS
METHOD FOR THE HYDROSILYLATION OF A SILOXANE PHOTOCATALYSED BY A POLYOXOMETALATE COMPOUND

(30) Priorité: 21.12.2012 FR 1262594
(43) Date de publication de la demande: 28.10.2015
(73) Titulaire: Bluestar Silicones France SAS, 69003 Lyon Cedex 03 (FR)
(72) Inventeur: POUGET, Emmanuel, F-69008 Lyon (FR); FRANCES, Jean-Marc, F-69330 Meyzieu (FR)
(74) Mandataire: Mekki, Boualem
(86) Numéro de dépôt international: PCT/FR2013/053190
(87) Numéro de publication internationale: WO 2014/096720

(56) Documents cités:
- WO-A2-2011/006044
- DE VEKKI D A: "Hydrosilylation on photoactivated catalysts", RUSSIAN JOURNAL OF GENERAL CHEMISTRY, NAUKA/INTERPERIODICA, MO, vol. 81, no. 7, 18 août 2011 (2011-08-18), pages 1480-1492, XP019941266, ISSN: 1608-3350, DOI: 10.1134/S1070363211070139
- MANOLIS D. TZIRAKIS ET AL: "Decatungstate as an efficient photocatalyst in organic chemistry", CHEMICAL SOCIETY REVIEWS, vol. 38, no. 9, 1 janvier 2009 (2009-01-01), page 2609, XP055074228, ISSN: 0306-0012, DOI: 10.1039/b812100c cité dans la demande
- JACQUES LALEVÉE ET AL: "Decatungstate (W10O?324-)/Silane: A New and Promising Radical Source Under Soft Light Irradiation", MACROMOLECULAR RAPID COMMUNICATIONS, vol. 32, no. 11, 1 juin 2011 (2011-06-01), pages 838-843, XP055074243, ISSN: 1022-1336, DOI: 10.1002/marc.201100099 cité dans la demande

## Description

### DOMAINE DE L'INVENTION

L'invention se situe dans le domaine technique des siloxanes, et notamment des polyorganosiloxanes également appelés couramment silicones. Plus spécifiquement, la présente invention concerne des réactions d'hydrosilylation, également appelées polyadditions, d'un composé insaturé avec un siloxane comprenant au moins un atome d'hydrogène lié à un atome de silicium.

### ARRIERE-PLAN TECHNOLOGIQUE

Dans le domaine des silicones, l'hydrosilylation est une réaction majeure.

Lors d'une réaction d'hydrosilylation, un composé comprenant au moins une insaturation réagit avec un composé comprenant au moins un atome d'hydrogène lié à un atome de silicium. Cette réaction peut par exemple être décrite par l'équation réactionnelle (1) dans le cas d'une insaturation de type alcène : 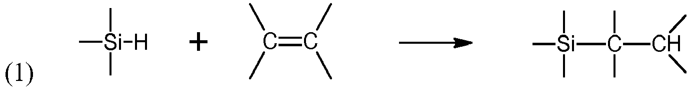 ou par l'équation réactionnelle (2) dans le cas d'une insaturation de type alcyne :

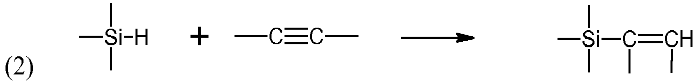

L'hydrosilylation permet donc de lier des siloxanes, et notamment des silicones, comprenant des motifs Si-H, avec des composés présentant au moins une instauration de type alcène ou alcyne, par exemple des silicones comprenant des motifs Si-vinyle.

Les réactions d'hydrosilylation sont classiquement réalisées par catalyse. Typiquement, le catalyseur approprié pour cette réaction est un catalyseur au platine, tel que par exemple l'acide chloroplatinique hexahydrate ou le catalyseur de Karstedt qui est constitué de complexes de platine avec du divinyltétraméthyldisiloxane comme ligand (voir par exemple dans le brevet US 3 775 452).

Toutefois, l'utilisation de catalyseur au platine est problématique. Il est en effet préférable d'éviter l'emploi du platine à l'échelle industrielle car il s'agit d'un métal cher, en voie de raréfaction et dont le coût fluctue énormément. De ce fait, les composés siliciés fabriqués par hydrosilylation, tels que les siloxanes et polyorganosiloxanes fonctionnalisés par hydrosilylation et les compositions silicones réticulables par hydrosilylation, ont un coût indexé sur celui du platine, ce qui est ennuyeux aussi bien pour les fabricants que pour leurs clients.

Il serait donc avantageux de disposer d'une alternative à la réaction d'hydrosilylation catalysée par du platine. Il serait tout particulièrement intéressant de proposer un nouveau type de catalyseur pour les réactions d'hydrosilylation de siloxanes ne contenant pas de platine.

L'utilisation d'autres catalyseurs a été proposée par le passé, par exemple l'utilisation de rhodium ou d'iridium. Toutefois, ces métaux sont tout aussi rares que le platine, et leur utilisation ne résout pas les problèmes mentionnés. La demande internationale de brevet WO 2011/006044 décrit l'utilisation de complexes de manganèse, de fer, de cobalt ou de nickel contenant des ligands pyridine di-imines comme catalyseur d'hydrosilylation. En outre, la publication de D.A. de Vekki (« Hydrosilylation on Photoactivated Catalyst », Russian Journal of General Chemistry, 2011, 81, 7, 1480-1492) décrit des catalyseurs photoactivables d'hydrosilylation des liaisons C=C, C=C et C=O.

Un des objectifs de la présente invention est donc de proposer un procédé d'hydrosilylation entre un composé siloxane et un composé insaturé, qui utiliserait un catalyseur avantageusement peu coûteux, d'approvisionnement facile, facile à manipuler et/ou peu ou pas toxique. En outre, on souhaite que les rendements d'hydrosilylation obtenus avec ce catalyseur alternatif soient les plus élevés possibles.

Par ailleurs, l'utilisation de composés de la famille des polyoxométallates, couramment appelés POM, en tant que catalyseur a été décrite dans la littérature. Les POM sont des agrégats anioniques d'oxydes de métaux de transition. La publication de D. Tzirakis et al. « Decatungstate as en efficient photocatalys in organic chemistry » (Chemical Society Reviews, 2009, 38, 2609-2621) décrit en particulier les propriétés photochimiques des POM, et notamment du décatungstate, et leur utilisation comme photocatalyseur. Cette publication décrit l'utilisation de décatungstate pour la création de liaisons carbone-carbone par rupture homolytique de liaisons carbone-hydrogène, pour l'oxydation en présence d'oxygène et pour la dégradation de polluants organiques.

Plus récemment, les chercheurs Jacques Lalevée, Nicolas Blanchard, Mohamad-Ali Tehfe et Jean Pierre Fouassier ont décrit pour la première fois dans une publication intitulée « Decatungstate (W10O324-)/Silane: a New and Promising Radical Source Under Soft Light Irradiation» (Macromolecular Rapid Communications, 2011, 32, 838-843) que le décatungstate pouvait être utilisé comme photocatalyseur pour former des radicaux silyl à partir de silanes. La photopolymérisation d'époxydes a été présentée comme une utilisation concrète de cette propriété. Toutefois, aucune application en hydrosilylation n'a été envisagée. En outre, ces divulgations ne concernent pas les siloxanes, dont la réactivité est différente de celle des silanes.

### BREVE DESCRIPTION DE L'INVENTION

L'invention concerne en premier lieu un procédé d'hydrosilylation entre un composé siloxane (A) comprenant au moins un atome d'hydrogène lié à un atome de silicium et un composé insaturé (B) comprenant au moins une fonction alcène et/ou au moins une fonction alcyne, ledit procédé étant caractérisé par le fait qu'il est catalysé par un photocatalyseur choisi parmi les polyoxométallates.

La présente invention a également pour objet une composition comprenant :
- un composé siloxane (A) comprenant au moins un atome d'hydrogène lié à un atome de silicium,
- un composé insaturé (B) comprenant au moins une fonction alcène et/ou au moins une fonction alcyne, et
- un photocatalyseur choisi parmi les polyoxométallates.

Enfin, l'utilisation d'un polyoxométallate, de préférence d'un décatungstate, comme photocatalyseur d'une réaction d'hydrosilylation d'un composé insaturé comprenant au moins une fonction alcène et/ou au moins une fonction alcyne, avec un composé siloxane comprenant au moins un atome d'hydrogène lié à un atome de silicium, est aussi un objet de la présente invention.

### BREVE DESCRIPTION DES FIGURES

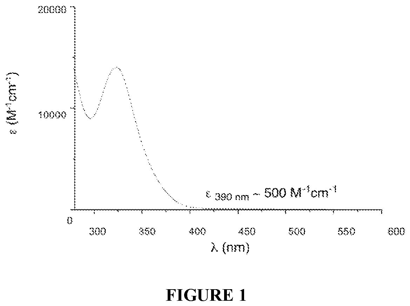

La **figure 1** représente le spectre d'absorption du décatungstate en solution dans l'acétonitrile.

### DESCRIPTION DETAILLEE DE L'INVENTION

Il est précisé que, dans toute cette description, l'expression « compris(e) entre ... et ... » doit s'entendre comme incluant les bornes citées.

La présente invention concerne donc une réaction d'hydrosilylation entre d'une part un composé siloxane (A) comprenant au moins un atome d'hydrogène lié à un atome de silicium et d'autre part un composé insaturé (B), cette réaction étant photocatalysée par un polyoxométallate, couramment appelé POM.

Comme expliqué précédemment, les POM ont déjà été décrits dans la littérature. Les POM sont des agrégats (ou « cluster » selon la terminologie anglo-saxonne) anioniques, constitués d'au moins 3 oxoanions de métal de transition qui partagent leurs atomes d'oxygène, et formant ensemble un réseau tridimensionnel structuré.

Les POM peuvent être décrits par la formule générale [XₐM_{b}O_{c}]ⁿ⁻ dans laquelle
X représente un atome d'hydrogène ou un atome choisi parmi B, Al, Si, P, S, Ga, Ge, As, Ce, Th et Sb ;
M représente un métal de transition ;
O représente l'atome d'oxygène ;
a représente un nombre entier pouvant valoir 0, 1 ou 2 ;
b représente un nombre entier pouvant valoir de 3 à 20 ;
c représente un nombre entier pouvant valoir de 6 à 62 ; et
n représente un nombre entier supérieur ou égal à 1, de préférence pouvant valoir de 1 à 10.

Cette formule générale comprend également les formes hydratées des agrégats anioniques, bien que celles-ci ne soient pas représentées explicitement.

Dans cette formule générale, tous les atomes représentés par M, et éventuellement tous les atomes représentés par X si a vaut 2, peuvent être identiques ou différents.

Un POM contient donc des métaux de transition M. Le métal de transition du POM peut être choisi parmi les éléments des groupes 4, 5, 6 et 7 de la classification périodique, de préférence parmi les éléments des groupes 5 et 6. Le métal de transition peut être choisi de façon préférée dans le groupe constitué par le vanadium (V), le niobium (Nb), le tantale (Ta), le chrome (Cr), le molybdène (Mo) et le tungstène (W), de façon plus préférée dans le groupe constitué par le vanadium (V), le niobium (Nb), le tantale (Ta), le molybdène (Mo) et le tungstène (W), de façon encore plus préférée dans le groupe constitué par le vanadium (V), le molybdène (Mo) et le tungstène (W). Dans le cas où le POM est à base de vanadium, on peut parler de polyoxovanadate. Dans le cas où le POM est à base de molybdène, on peut parler de polyoxomolybdate. Dans cas où le POM est à base de tungstène, on peut parler de polyoxotungstate. Le POM mis en oeuvre dans la présente invention peut être un polyoxovanadate, un polyoxomolybdate, un polyoxotungstate, ou leurs mélanges, et tout particulièrement un polyoxotungstate. Les polyoxotungstates sont par exemple décrits dans l'ouvrage de référence *« Advanced Inorganic Chemistry : a comprehensive text »* de Cotton et Wilkinson.

Le métal de transition dans le POM est généralement dans un état d'oxydation élevé, de préférence V ou VI.

Selon un mode de réalisation, le POM peut être constitué uniquement d'atomes de métal de transition et d'oxygène, ce qui correspond au fait que le symbole a vaut zéro dans le formule générale [XₐM_{b}O_{c}]ⁿ⁻. Dans ce mode de réalisation, la formule générale du POM est alors [M_{b}O_{c}]ⁿ⁻, dans laquelle M, O, b, c et n ont les significations décrites ci-dessus. Ce type de POM peut être désigné par le terme « isopolyanion ».

Toutefois, il est possible dans un autre mode de réalisation que le POM comprenne également un ou plusieurs hétéroatomes, ce qui correspond au fait que le symbole a est différent de zéro dans le formule générale [XₐM_{b}O_{c}]ⁿ⁻. X est choisi de préférence dans le groupe constitué par le phosphore (P) et le silicium (Si). Ce type de POM peut être désigné par le terme « hétéropolyanion ».

Les valeurs des symboles a, b, c et n sont telles que les règles de valence des différents atomes sont respectées de manière à obtenir un agrégat anionique.

Le POM mis en oeuvre dans la présente invention peut être choisi dans le groupe constitué par [W₁₀O₃₂]⁴⁻, [Mo₆O₁₉]²⁻, [V₁₀O₂₈]⁶⁻, [PW₁₂O₄₀]³⁻, [PMo₁₂O₄₀]³⁻, [SiW₁₀O₄₀]⁴⁻ et leurs mélanges. De façon préférée, le POM mis en oeuvre dans la présente invention est choisi parmi les POM ne contenant pas de phosphore. De façon tout particulièrement préférée, le POM mis en oeuvre dans la présente invention est [W₁₀O₃₂]⁴⁻, couramment appelé « décatungstate ».

Les POM étant des composés ioniques, ils peuvent se présenter sous forme de sel. Le ou les contre-ions peuvent être choisis dans le groupe constitué par le proton (H⁺), par les ions alcalins, notamment Na⁺, K⁺ et Li⁺, par les cations halogènes, notamment l'iodonium, et par les cations ammoniums, sulfoniums, phosphoniums, ferroceniums et carbocations.

Le photocatalyseur mis en oeuvre dans le procédé objet de l'invention peut être un sel de décatungstate. Il s'agit de façon très préférée de décatungstate de tétrabutylammonium (TBADT), de formule (n-Bu₄N⁺)₄ [W₁₀O₃₂]⁴⁻.

Les POM peuvent être synthétisés selon les procédés décrits dans l'art antérieur. Par exemple, la synthèse du TBADT a été décrite dans la publication de Protti et al. (Chem. Commun., 2009, 7351-7353) et dans la publication de Chemseddine et al. (Inorg. Chem., 1984, 23, 2609). Cette synthèse peut être effectuée à partir de tungstate de sodium et de bromure de tétrabutylammonium en milieu acide.

Les POM en général, et le décatungstate en particulier, sont avantageux à cause de leurs propriétés photochimiques. Ils peuvent en effet être excités dans des conditions d'irradiation très douce, en UV proche voire en lumière visible. La figure 1 montre le spectre d'absorption du décatungstate dans l'acétonitrile. On constate que ce photocatalyseur absorbe la lumière dans des longueurs d'onde comprises entre environ 300 nm et environ 420 nm. Le maximum d'absorption dans l'acétonitrile du décatungstate est centré sur environ 324 nm. L'absorption de ce composé dans le visible est significative: le coefficient d'extinction molaire à 400 nm (ε₄₀₀ₙₘ) vaut environ 400 L.mol⁻¹.cm⁻¹ et le coefficient d'extinction molaire à 390 nm (ε₃₉₀ₙₘ) vaut environ 500 L.mol⁻¹.cm⁻¹. Il est donc possible de l'exciter dans cette gamme de longueurs d'onde. Le photocatalyseur ainsi excité est alors capable de réaliser une abstraction d'hydrogène sur un composé siloxane ayant un atome d'hydrogène lié à un atome de silicium.

Le catalyseur POM n'étant actif que lorsqu'il est irradié, il est facile d'arrêter la réaction d'hydrosilylation en arrêtant l'irradiation. Ceci représente un avantage par rapport aux catalyseurs utilisés dans l'art antérieur avec lesquels il est difficile de contrôler ou d'arrêter la réaction lorsque celle-ci a été amorcée. Un des avantages de la présente invention réside donc dans le fait que le déroulé de la réaction est contrôlable. La réaction d'hydrosilylation est ainsi plus sûre d'un point du vue risque industriel.

Un des réactifs de la réaction d'hydrosilylation selon l'invention est un composé siloxane (A) comprenant au moins un atome d'hydrogène lié à un atome de silicium.

Par composé « siloxane », on entend dans la présente invention les composés chimiques possédant au moins un motif ≡Si-O-Si≡. Les composés silanes ne font pas partie du groupe des composés siloxanes.

Tout composé siloxane comprenant au moins un atome d'hydrogène lié à un atome de silicium peut être utilisé dans le procédé selon l'invention, dans la mesure où il ne contient pas de fonction chimique réactive pouvant gêner, voire empêcher la réaction d'hydrosilylation.

Le composé siloxane (A) comprend au moins deux atomes de silicium, de préférence au moins 3 atomes de silicium ou plus.

Ledit composé siloxane (A) peut avantageusement être un polyorganosiloxane comprenant au moins un motif de formule (I) :

H_{d}ZₑSiO_{(4-(d+e))/2} (I)

dans laquelle :
- Z représente un radical monovalent différent d'un atome d'hydrogène,
- d et e représentent des nombres entiers, d valant 1 ou 2, e valant 0, 1 ou 2 et (d+e) valant 1, 2 ou 3 ;
et éventuellement d'autres motifs de formule (II) :

Z_{f}SiO_{(4-f)/2} (II)

dans laquelle :
- Z a la même signification que ci-dessus, et
- f représente un nombre entier compris entre 0 et 3.

Il est entendu dans la formule (I) et dans la formule (II) ci-dessus que si plusieurs groupes Z sont présents, ils peuvent être identiques ou différents les uns des autres.

Dans la formule (I), le symbole d peut préférentiellement valoir 1.

De plus, dans la formule (I) et dans la formule (II), Z peut représenter un radical monovalent choisi dans le groupe constitué par un groupe alkyle ayant 1 à 8 atomes de carbone, éventuellement substitué par au moins un atome d'halogène, et un groupe aryle. Z peut avantageusement représenter un radical monovalent choisi dans le groupe constitué par méthyle, éthyle, propyle, 3,3,3-trifluoropropyle, xylyle, tolyle et phényle. des exemples de motifs de formule (I) sont les suivants : H(CH₃)₂SiO_{1/2}, HCH₃SiO_{2/2} et H(C₆H₅)SiO_{2/2}.

Ledit composé siloxane (A) peut avantageusement être un polyorganosiloxane comprenant au moins deux motifs de formule (I) ou plus.

Le polyorganosiloxane peut présenter une structure linéaire, ramifié, cycliques ou en réseau.

Lorsqu'il s'agit de polyorganosiloxanes linéaires, ceux-ci peuvent être essentiellement constitués :
- de motifs siloxyles « D » choisi parmi les motifs de formules HZSiO_{2/2} et Z₂SiO_{2/2} ;
- de motifs siloxyles « M » choisis parmi les motifs de formules HZ₂SiO_{1/2} et Z₃SiO_{2/2}.

Ces polyorganosiloxanes linéaires peuvent être des huiles ayant une viscosité dynamique à 25°C comprise entre 1 mPa.s et 100 000 mPa.s, préférentiellement entre 10 mPa.s et 5 000 mPa.s, ou des gommes ayant une viscosité dynamique à 25°C supérieure à 100 000 mPa.s.

Lorsqu'il s'agit de polyorganosiloxanes cycliques, ceux-ci peuvent être constitués de motifs siloxyles « D » choisi parmi les motifs de formules HZSiO_{2/2} et Z₂SiO_{2/2}, ou de motifs siloxyle de formule HZSiO_{2/2} uniquement. Les motifs de formule Z₂SiO_{2/2} peuvent être notamment des dialkylsiloxy ou des alkylarylsiloxy. Ces polyorganosiloxanes cycliques peuvent avoir une viscosité dynamique à 25°C comprise entre 1 mPa.s et 5 000 mPa.s.

La viscosité dynamique à 25°C de tous les polymères décrits dans la présente demande peut être mesurée à l'aide d'un viscosimètre Brookfield, selon la norme AFNOR NFT 76 102 de février 1972.

Des exemples de polyorganosiloxanes pouvant être des composés siloxane (A) sont :
- les diméthylpolysiloxanes à extrémités hydrogénodiméthylsilyles ;
- les diméthylhydrogénométhylpolysiloxanes à extrémités triméthylsilyles ;
- les diméthylhydrogénométhylpolysiloxanes à extrémités hydrogénodiméthylsilyles ;
- les hydrogénométhylpolysiloxanes à extrémités triméthylsilyles ;
- les hydrogénométhylpolysiloxanes cycliques.

Lorsqu'il s'agit de polyorganosiloxanes ramifiés ou en réseaux, ceux-ci peuvent comprendre en outre :
- des motifs siloxyles « T » choisis parmi les motifs de formules HSiO_{3/2} et ZSiO_{3/2} ;
- des motifs siloxyles « Q » de formule SiO_{4/2}.

Un exemple de polyorganosiloxane pouvant être un composé siloxane (A) est le composé de formule suivante :

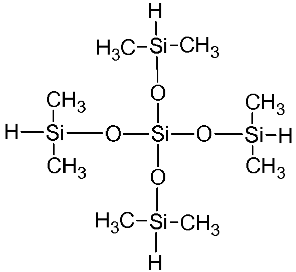

Le second des réactifs de la réaction d'hydrosilylation selon l'invention est un composé insaturé.

Le composé insaturé (B) selon l'invention est un composé chimique comprenant au moins une insaturation ne faisant pas partie d'un cycle aromatique. Le composé insaturé (B) comprend au moins une fonction alcène et/ou une fonction alcyne. Tout composé comprenant au moins une fonction alcène et/ou une fonction alcyne peut être utilisé dans le procédé selon l'invention, dans la mesure où il ne contient pas de fonction chimique réactive pouvant gêner, voire empêcher la réaction d'hydrosilylation.

Selon un mode de réalisation, le composé insaturé (B) comprend une ou plusieurs fonctions alcène et de 2 à 40 atomes de carbone. Il peut comprendre en outre 1 à 3 hétéroatomes choisis parmi N, O, F, Cl, Br et I. Lorsque le composé insaturé (B) comprend plusieurs fonctions alcènes, celles-ci peuvent être conjuguées ou pas.

Selon un autre mode de réalisation, le composé insaturé (B) comprend une ou plusieurs fonctions alcynes et de 2 à 40 atomes de carbone. Il peut comprendre en outre 1 à 3 hétéroatomes choisis parmi N, O, F, Cl, Br et I. Lorsque le composé insaturé (B) comprend plusieurs fonctions alcynes, celles-ci peuvent être conjuguées ou pas.

Ledit composé insaturé (B) peut être choisi dans le groupe constitué par :
- les composés organiques insaturés non polymériques,
- les composés polyorganosiloxanes comprenant au moins une fonction alcène et/ou au moins une fonction alcyne,
et leurs mélanges.

Dans le cas où le composé insaturé (B) est choisi parmi les composés organiques insaturés non polymériques, il peut être choisi de manière générale parmi les composés de formule (III) ou (IV) : 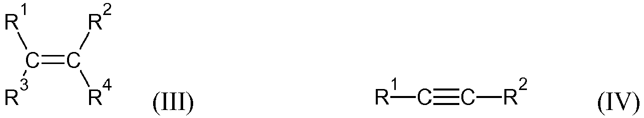 dans lesquelles R¹, R², R³ et R⁴ représentent, indépendamment les uns des autres, un radical monovalant.

R¹, R², R³ et R⁴ peuvent être choisis, indépendamment les uns des autres, dans le groupe constitué par :
- un atome d'hydrogène,
- un atome d'halogène choisi parmi le fluor, le chlore, le brome et l'iode,
- un groupe alkyle,
- un groupe cycloalkyle,
- un groupe aryle,
- un groupe hétéroaryle,
- un groupe hétérocycloalkyle,
- un groupe alcoxy,
- un groupe aryloxy,
- un groupe cycloalcoxy,
- un groupe alkylsilyl,
- un groupe alcoxysilyl,
- un groupe acide carboxylique,
- un groupe esters alkylique,
- un groupe urée,
- un groupe amide,
- un groupe sulfonamide,
- un groupe imides,
- un groupe cyano,
- un groupe aldéhyde,
- un groupe alcool,
- un groupe thiol,
- un groupe amine,
- un groupe imine,
- un groupe sulfure,
- un groupe sulfoxyde,
- un groupe sulfone,
- ou un groupe azide ;
ces groupes pouvant être eux-mêmes substitués sur leur(s) partie(s) alkyle(s) et/ou cycloalkyle(s) et/ou aryle(s) par un ou plusieurs groupes alkyles en C₁ à C₈, éventuellement halogénés, par un ou plusieurs groupes alcoxy en C₁ à C₈, éventuellement halogénés, par un ou plusieurs groupes aryle, éventuellement halogéné, par un ou plusieurs groupes cycloalkyles, éventuellement halogénés, par un ou plusieurs groupes hétéroaryles, éventuellement halogénés, par un ou plusieurs groupes hétérocycloalkyles, éventuellement halogénés, par un ou plusieurs atomes d'halogène, par un ou plusieurs groupes acides carboxyliques, par un ou plusieurs groupes esters, par un ou plusieurs groupes éthers, par un ou plusieurs groupes urées, par un ou plusieurs groupes amides, par un ou plusieurs groupes sulfonamides, par un ou plusieurs groupes imides, par un ou plusieurs groupes cyano, par un ou plusieurs groupes aldéhydes, par une ou plusieurs fonctions cétones, par un ou plusieurs groupes alcools, par un ou plusieurs groupes thiols, par un ou plusieurs groupes amines, par un ou plusieurs groupes imines, par un ou plusieurs groupes sulfures, par un ou plusieurs groupes sulfoxydes, par un ou plusieurs groupes sulfones, et/ou par un ou plusieurs groupes azides ;
ou bien
au moins deux groupes choisis parmi R¹, R², R³ et R⁴ forment ensemble avec les atomes de carbone auxquels ils sont liés un ou plusieurs groupes cycloalkyles, hétérocycloalkyles, aryles ou hétéroaryles, ces groupes, cycloalkyles, hétérocycloalkyles, aryles et hétéroaryles pouvant être substitués par un ou plusieurs groupes alkyles en C₁ à C₈, éventuellement halogénés, par un ou plusieurs groupes alcoxy en C₁ à C₈, éventuellement halogénés, par un ou plusieurs groupes aryle, éventuellement halogéné, par un ou plusieurs atomes d'halogène, par un ou plusieurs groupes acides carboxyliques, par un ou plusieurs groupes esters, par un ou plusieurs groupes éthers, par un ou plusieurs groupes urées, par un ou plusieurs groupes amides, par un ou plusieurs groupes sulfonamides, par un ou plusieurs groupes imides, par un ou plusieurs groupes cyano, par un ou plusieurs groupes aldéhydes, par une ou plusieurs fonctions cétones, par un ou plusieurs groupes alcools, par un ou plusieurs groupes thiols, par un ou plusieurs groupes amines, par un ou plusieurs groupes imines, par un ou plusieurs groupes sulfures, par un ou plusieurs groupes sulfoxydes, par un ou plusieurs groupes sulfones, et/ou par un ou plusieurs groupes azides ;
les groupes restants étant tels que définis précédemment.

Par « alkyle », on entend selon l'invention une chaîne hydrocarbonée saturée, linéaire ou ramifiée contenant de 1 à 20 atomes de carbone, de préférence de 1 à 8 atomes de carbone. Un groupe alkyle peut être choisi dans le groupe constitué par méthyle, éthyle, isopropyle, n-propyle, tert-butyle, isobutyle, n-butyle, n-pentyle, isoamyle et 1,1-diméthylpropyle.

Par « cycloalkyle », on entend selon l'invention un groupe hydrocarboné saturé monocyclique ou polycyclique, de préférence monocyclique ou bicyclique, contenant de 3 à 20 atomes de carbone, de préférence de 5 à 8 atomes de carbone. Lorsque le groupe cycloalkyle est polycyclique, les multiples noyaux cycliques peuvent être rattachés les uns aux autres par une liaison covalente et/ou par un atome spinanique et/ou être condensés les uns aux autres. Un groupe cycloalkyle peut être choisi dans le groupe constitué par le cyclopropyle, le cyclobutyle, le cyclopentyle, le cyclohexyle, le cycloheptyle, le cyclooctyle, l'adamantane et le norborane.

Par « aryle », on entend selon l'invention un groupe hydrocarboné aromatique contenant de 5 à 18 atomes de carbone, monocyclique ou polycyclique. Un groupe aryle peut être choisi dans le groupe constitué par phényle, naphtyle, anthracényle et phénanthryle.

Par « atome d'halogène », on entend selon l'invention un atome choisi dans le groupe constitué par le fluor, le chlore, le brome et l'iode.

Par « hétéroaryle », on entend selon l'invention un groupe aryle, c'est-à-dire un groupe hydrocarboné aromatique contenant de 5 à 18 atomes de carbone, monocyclique ou polycyclique, dans lequel au moins un atome de carbone a été substitué par un hétéroatome choisi parmi O, N, S et P. Un groupe hétéroaryle peut être choisi dans le groupe constitué par pyranyle, furanyle, pyridinyle, pyrimidinyle, pyrrolyle, pyrazolyle, imidazolyle, isothizolyle, isoxazolyle et indolyle.

Par « hétérocycloalkyle », on entend selon l'invention un groupe cycloalkyle, c'est-à-dire un groupe hydrocarboné saturé monocyclique ou polycyclique, de préférence monocyclique ou bicyclique, contenant de 3 à 20 atomes de carbone, dans lequel au moins un atome de carbone a été substitué par un hétéroatome choisi parmi O, N, S et P. Un groupe hétérocycloalkyle peut en particulier être le groupe monocyclique oxiranyl ou le groupe bicyclique époxycyclohexyl.

Par « alcoxy », on entend selon l'invention un groupe alkyle tel que défini ci-avant lié à un atome d'oxygène. Un groupe alcoxy peut être choisi dans le groupe constitué par méthoxy, éthoxy, propoxy et butoxy.

Par « aryloxy », on entend selon l'invention un groupe aryle tel que défini ci-avant lié à un atome d'oxygène. Un groupe aryloxy peut être par exemple le groupe phénoxy.

Par « cycloalcoxy », on entend selon l'invention un groupe cycloalkyle tel que défini ci-avant lié à un atome d'oxygène.

Par « alkylsilyl », on entend selon l'invention un groupe alkyle tel que défini ci-avant lié à un atome de silicium.

Par « alcoxysilyl », on entend selon l'invention un groupe alcoxy tel que défini ci-avant lié à un atome de silicium.

De préférence, R¹, R², R³ et R⁴ représentent, indépendamment les uns des autres:
- un atome d'hydrogène ;
- un groupe alkyle en C₁ à C₈, éventuellement substitué par un groupe hydroxy et/ou par un atome d'halogène ;
- un phényle, éventuellement substitué par un groupe alkyle en C₁ à C₄, par un halogène, par un groupe alkyle en C₁ à C₄ lui-même substitué par un ou plusieurs halogènes, par un groupe alcoxy en C₁ à C₄ ou par une fonction amine éventuellement substituée une ou deux fois par un groupe alkyle en C₁ à C₄ ;

- une pyridine ;
- un ester alkylique en C₁ à C₈ ;
- une fonction cyano ;
- une fonction acide carboxylique ;
- un groupe acyloxy en C₁ à C₄, notamment acétyloxy ;
- un groupe amide primaire, notamment non substituées sur l'azote ou substituées une ou deux fois par un groupe alkyle en C₁ à C₄ ;
- un groupe alkyle polyéthoxylé, éventuellement substitué par un hydroxy ou une cétone ;
- un groupe époxycyclohexyle ;
- un groupe oxiranyle ou un groupe alkyle en C₁ à C₈ substitué par un groupe oxiranyle.

Avantageusement, R¹ peut être un atome d'hydrogène, et R² peut représenter un substituant différent d'un atome d'hydrogène. Dans le cas d'un composé de formule (III), R³ et R⁴ peuvent en outre être des atomes d'hydrogène.

Ledit composé insaturé (B) peut également être un composé organique insaturé non polymérique choisi dans le groupe constitué par :
- l'acétylène ;
- les acrylates et les méthacrytales d'alkyles en C₁ à C₄ ;
- l'acide acrylique ou méthacrylique ;
- les alcènes, de préférence l'octène et plus préférentiellement le 1-octène ;
- l'alcool allylique ;
- l'allylamine ;
- l'éther d'allyle et glycidyle ;
- l'éther d'allyle et de pipéridine, préférentiellement l'éther d'allyle et de pipéridine stériquement encombrée ;
- les styrènes, préférentiellement l'alpha-méthyl-styrène,
- le 1,2-époxy-4-vinylcyclohexane.
- le chlorure d'allyle ;
- les alcènes chlorés, de préférence le chlorure d'allyle ; et
- les alcènes fluorés, de préférence de 4,4,5,5,6,6,7,7,7-nonafluoro-1-heptène.

Le composé insaturé (B) peut également être choisi parmi les composés comprenant plusieurs fonctions alcènes, de préférence deux ou trois fonctions alcènes, et de façon particulièrement préférée choisi parmi les composés suivants : 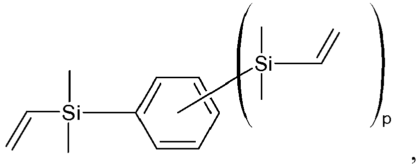 avec p valant 1 ou 2, 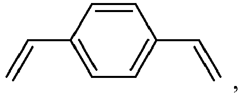 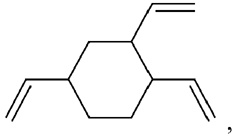 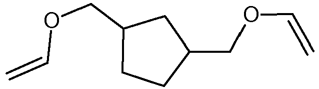 et 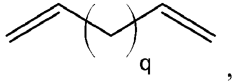 avec q valant de 2 à 6, de préférence q valant 2 ou 4.

Le procédé d'hydrosilylation selon l'invention permet, selon ce mode de réalisation, de lier des groupes organiques comprenant avantageusement une fonction chimique intéressante à des siloxanes, notamment à des polyorganosiloxanes. Lorsque le composé insaturé (B) comprend une seule fonction alcène ou alcyne, le procédé selon l'invention peut être utilisé comme procédé de fonctionnalisation qui peut être totale ou partielle. Lorsque le composé insaturé (B) comprend deux fonctions alcène ou alcyne, ou plus, il joue le rôle de pont entre plusieurs composés siloxanes (A), de préférence entre plusieurs polysiloxanes.

Dans le cas où le composé insaturé (B) est choisi parmi les composés polyorganosiloxanes comprenant au moins une fonction alcène et/ou au moins une fonction alcyne, il peut être choisi de manière générale parmi les polyorganosiloxanes comprenant au moins un motif de formule (V) :

Y_{g}LₕSiO_{(4-(g+h))/2} (V)

dans laquelle :
- Y représente un radical linéaire ou ramifié contenant entre 2 et 12 atomes de carbone, ayant au moins une fonction alcène et/ou au moins une fonction alcyne, et éventuellement au moins un hétéroatome,
- L représente un radical monovalent ne comprenant pas de fonction alcène ou alcyne ;
- g et h représentent des nombres entiers, g valant 1, 2 ou 3, h valant 0, 1 ou 2 et (g+h) valant 1, 2 ou 3 ;
et comportant éventuellement d'autres motifs de formule (VI) :

LᵢSiO_{(4-i)/2} (VI)

dans laquelle :
- L a la même signification que ci-dessus, et
- i représente un nombre entier compris entre 0 et 3.

Il est entendu dans la formule (V) et dans la formule (VI) ci-dessus que si plusieurs groupes Y et L sont présents, ils peuvent être identiques ou différents les uns des autres.

Dans la formule (V), le symbole g peut préférentiellement valoir 1 ou 2, plus préférentiellement 1.

De plus, dans la formule (V) et dans la formule (VI), L peut représenter un radical monovalent choisi dans le groupe constitué par un groupe alkyle ayant 1 à 8 atomes de carbone, éventuellement substitué par au moins un atome d'halogène, et un groupe aryle. L peut avantageusement représenter un radical monovalent choisi dans le groupe constitué par méthyle, éthyle, propyle, 3,3,3-trifluoropropyle, xylyle, tolyle et phényle.

En outre, dans la formule (V) et dans la formule (VI), la fonction alcène et/ou la fonction alcyne dans le radical Y peut (peuvent) être avantageusement en extrémité de chaîne. Y peut avantageusement représente un radical choisi dans le groupe constitué par vinyle, propényle, 3-butényle, 5-hexényle, 9-décényle, 10-undécényle, 5,9-décadiényle et 6,11-dodécadiényle.

De préférence, le composé insaturé (B) est choisi parmi les polyorganosiloxanes comprenant au moins deux motifs de formule (V) ou plus.

Le polyorganosiloxane peut présenter une structure linéaire, ramifié, cycliques ou en réseau.

Lorsqu'il s'agit de polyorganosiloxanes linéaires, ceux-ci peuvent être essentiellement constitués :
- de motifs siloxyles « D » choisi parmi les motifs de formules Y₂SiO_{2/2}, YLSiO_{2/2} et L₂SiO_{2/2} ;
- de motifs siloxyles « M » choisis parmi les motifs de formules Y₃SiO_{1/2}, Y₂LSiO_{1/2}, YL₂SiO_{1/2} et L₃SiO_{2/2}.

A titre d'exemples de motifs « D », on peut citer les groupes diméthylsiloxy, méthylphénylsiloxy, méthylvinylsiloxy, méthylbuténylsiloxy, méthylhexénylsiloxy, méthyldécénylsiloxy et méthyldécadiénylsiloxy.

A titre d'exemple de motifs « M », on peut citer les groupes triméthylsiloxy, diméthylphénylsiloxy, diméthylvinylsiloxy et diméthylhexénylsiloxy.

Ces polyorganosiloxanes linéaires peuvent être des huiles ayant une viscosité dynamique à 25°C comprise entre 1 mPa.s et 100 000 mPa.s, préférentiellement entre 10 mPa.s et 5 000 mPa.s, ou des gommes ayant une viscosité dynamique à 25°C supérieure à 100 000 mPa.s.

Lorsqu'il s'agit de polyorganosiloxanes cycliques, ceux-ci peuvent être constitués de motifs siloxyles « D » choisi parmi les motifs de formules Y₂SiO_{2/2}, YLSiO_{2/2} et L₂SiO_{2/2}. Des exemples de tels motifs « D » sont décrits ci-dessus. Ces polyorganosiloxanes cycliques peuvent avoir une viscosité dynamique à 25°C comprise entre 1 mPa.s et 5 000 mPa.s.

La viscosité dynamique à 25°C de tous les polymères décrits dans la présente demande peut être mesurée à l'aide d'un viscosimètre Brookfield, selon la norme AFNOR NFT 76 102 de février 1972.

Des exemples de polyorganosiloxanes pouvant être des composés insaturés (B) sont :
- les diméthylpolysiloxanes à extrémités diméthylvinylsilyles ;
- les diméthylphénylméthylpolysiloxanes à extrémités diméthylvinylsilyles ;
- les diméthylvinylméthylpolysiloxanes à extrémités diméthylvinylsilyles ;
- les diméthylvinylméthylpolysiloxanes à extrémités triméthylsilyles ;
- les méthylvinylpolysiloxanes cycliques.

Le procédé d'hydrosilylation selon l'invention permet, selon ce mode de réalisation, de lier des composés siloxanes (A), préférentiellement des polysiloxanes ayant au moins un atome d'hydrogène lié à un atome de silicium, avec des polysiloxanes ayant au moins une fonction alcène ou une fonction alcyne. Le procédé selon l'invention peut être utilisé comme procédé de réticulation. Il est préférable dans ce cas que les polysiloxanes utilisés en tant que composés siloxanes (A) comprennent, par molécule, au moins trois atomes d'hydrogène lié à des atomes de silicium, et que les polysiloxanes utilisés en tant que composé insaturé (B) comprennent, par molécule, au moins deux fonctions insaturés choisies parmi les fonctions alcène ou alcyne.

Selon un mode de réalisation particulier de la présente invention, il est possible que le composé siloxane (A) comprenant au moins un atome d'hydrogène lié à un atome de silicium et le composé insaturé (B) comprenant au moins une fonction alcène et/ou au moins une fonction alcyne soient un seul et même composé.

Ce composé peut être qualifié de « bifonctionnel » car il comprend alors d'une part au moins une fonction alcène et/ou au moins une fonction alcyne, et d'autre part au moins un atome de silicium et au moins un atome d'hydrogène lié à l'atome de silicium. Il est susceptible de réagir avec lui-même par réaction d'hydrosilylation.

L'invention peut donc aussi concerner un procédé d'hydrosilylation d'un composé bifonctionnel avec lui-même, ledit composé bifonctionnel comprenant d'une part au moins une fonction alcène et/ou au moins une fonction alcyne, et d'autre part au moins un atome de silicium et au moins un atome d'hydrogène lié à l'atome de silicium, ledit procédé étant caractérisé par le fait qu'il est catalysé par un photocatalyseur choisi parmi les polyoxométallates.

Ledit composé bifonctionnel peut avantageusement être un polyorganosiloxane comprenant au moins un motif de formule (I) :

H_{d}ZₑSiO_{(4-(d+e))/2} (I)

dans laquelle :
- Z représente un radical monovalent différent d'un atome d'hydrogène,
- d et e représentent des nombres entiers, d valant 1 ou 2, e valant 0, 1 ou 2 et (d+e) valant 1, 2 ou 3 ;
et au moins un motif de formule (V) :

YgLₕSiO_{(4-(g+h))/2} (V)

dans laquelle :
- Y représente un radical linéaire ou ramifié contenant entre 2 et 12 atomes de carbone, ayant au moins une fonction alcène et/ou au moins une fonction alcyne, et éventuellement au moins un hétéroatome,
- L représente un radical monovalent ne comprenant pas de fonction alcène ou alcyne,
- g et h représentent des nombres entiers, g valant 1, 2 ou 3, h valant 0, 1 ou 2 et (g+h) valant 1, 2 ou 3 ;
et éventuellement d'autres motifs de formule (VII) :

WⱼSiO_{(4-d)/2} (VII)

dans laquelle :
- W représente un radical monovalent différent d'un atome d'hydrogène et ne comprenant pas de fonction alcène ou alcyne, et
- j représente un nombre entier compris entre 0 et 3.

Il est entendu dans la formule (I), dans la formule (V) et dans la formule (VII) ci-dessus que si plusieurs groupes Z, Y, L et W sont présents, ils peuvent être identiques ou différents les uns des autres.

Dans la formule (I), le symbole d peut préférentiellement valoir 1.

De plus, dans la formule (I), Z peut représenter un radical monovalent choisi dans le groupe constitué par un groupe alkyle ayant 1 à 8 atomes de carbone, éventuellement substitué par au moins un atome d'halogène, et un groupe aryle. Z peut avantageusement représenter un radical monovalent choisi dans le groupe constitué par méthyle, éthyle, propyle, 3,3,3-trifluoropropyle, xylyle, tolyle et phényle. Des exemples de motifs de formule (I) sont les suivants : H(CH₃)₂SiO_{1/2}, HCH₃SiO_{2/2} et H(C₆H₅)SiO_{2/2}.

Dans la formule (V), le symbole g peut préférentiellement valoir 1 ou 2, plus préférentiellement 1.

De plus, dans la formule (V), L peut représenter un radical monovalent choisi dans le groupe constitué par un groupe alkyle ayant 1 à 8 atomes de carbone, éventuellement substitué par au moins un atome d'halogène, et un groupe aryle. L peut avantageusement représenter un radical monovalent choisi dans le groupe constitué par méthyle, éthyle, propyle, 3,3,3-trifluoropropyle, xylyle, tolyle et phényle.

En outre, dans la formule (V), la fonction alcène et/ou la fonction alcyne dans le radical Y peut (peuvent) être avantageusement en extrémité de chaîne. Y peut avantageusement représente un radical choisi dans le groupe constitué par vinyle, propényle, 3-butényle, 5-hexényle, 9-décényle, 10-undécényle, 5,9-décadiényle et 6,11-dodécadiényle.

Dans la formule (VII), W peut représenter un radical monovalent choisi dans le groupe constitué par un groupe alkyle ayant 1 à 8 atomes de carbone, éventuellement substitué par au moins un atome d'halogène, et un groupe aryle. W peut avantageusement représenter un radical monovalent choisi dans le groupe constitué par méthyle, éthyle, propyle, 3,3,3-trifluoropropyle, xylyle, tolyle et phényle.

De préférence, ledit composé bifonctionnel est un polyorganosiloxane comprenant au moins deux motifs de formule (I) ou plus, et au moins deux motifs de formule (V) ou plus.

Le polyorganosiloxane bifonctionnel peut présenter une structure linéaire, ramifié, cycliques ou en réseau.

Lorsqu'il s'agit de polyorganosiloxanes linéaires, ceux-ci peuvent être essentiellement constitués :
- de motifs siloxyles « D » choisi parmi les motifs de formules HZSiO_{2/2}, Y₂SiO_{2/2}, YLSiO_{2/2} et W₂SiO_{2/2} ;
- de motifs siloxyles « M » choisis parmi les motifs de formules HZ₂SiO_{1/2}, Y₃SiO_{1/2}, Y₂LSiO_{1/2}, YL₂SiO_{1/2} et W₃SiO_{2/2}.

A titre d'exemples de motifs « D », on peut citer les groupes diméthylsiloxy, hydrogénométhylsiloxy, méthylphénylsiloxy, méthylvinylsiloxy, méthylbuténylsiloxy, méthylhexénylsiloxy, méthyldécénylsiloxy et méthyldécadiénylsiloxy.

A titre d'exemple de motifs « M », on peut citer les groupes triméthylsiloxy, diméthyhydrogénosiloxy, diméthylphénylsiloxy, diméthylvinylsiloxy et diméthylhexénylsilo xy.

Ces polyorganosiloxanes linéaires peuvent être des huiles ayant une viscosité dynamique à 25°C comprise entre 1 mPa.s et 100 000 mPa.s, préférentiellement entre 10 mPa.s et 5 000 mPa.s, ou des gommes ayant une viscosité dynamique à 25°C supérieure à 100 000 mPa.s.

Lorsqu'il s'agit de polyorganosiloxanes cycliques, ceux-ci peuvent être constitués de motifs siloxyles « D » choisi parmi les motifs de formules HZSiO_{2/2}, Y₂SiO_{2/2}, YLSiO_{2/2} et W₂SiO_{2/2}. Des exemples de tels motifs « D » sont décrits ci-dessus. Ces polyorganosiloxanes cycliques peuvent avoir une viscosité dynamique à 25°C comprise entre 1 mPa.s et 5 000 mPa.s.

La viscosité dynamique à 25°C de tous les polymères décrits dans la présente demande peut être mesurée à l'aide d'un viscosimètre Brookfield, selon la norme AFNOR NFT 76 102 de février 1972.

Des exemples de polyorganosiloxanes pouvant être des composés bifonctionnels sont :
- les diméthyl-hydrogénométhyl-vinylméthyl-polysiloxanes à extrémités diméthylvinylsilyles ;
- les diméthyl-hydrogénométhyl-vinylméthyl-polysiloxanes à extrémités diméthylhydrogénosilyles ;
- les diméthyl-hydrogénométhyl-vinylméthyl-polysiloxanes à extrémités diméthylvinylsilyles ;
- les diméthyl-hydrogénométhyl-propylglycidylétherméthyl-polysiloxanes à extrémités triméthylsilyles.

Dans ce qui suit, lorsqu'il est question de la mise en oeuvre du composé insaturé (B) et du composé siloxane (A), l'homme du métier comprendra qu'on entend également la mise en oeuvre d'un composé bifonctionnel.

Dans le procédé d'hydrosilylation selon l'invention, le photocatalyseur choisi parmi les polyoxométallates catalyse la réaction du composé insaturé (B) avec le composé siloxane (A).

D'un point de vue mise en oeuvre, ce procédé comprend au moins une étape consistant à mettre en contact le composé insaturé (B) avec le composé siloxane (A), en présence du catalyseur. La mise en contact de ces trois éléments peut être faite selon les techniques classiques connues de l'homme du métier.

Le procédé selon l'invention peut être réalisé dans un solvant. Des solvants appropriés sont ceux miscibles avec le composé insaturé (B) et avec le composé siloxane (A). Des exemples de solvants particuliers sont les hydrocarbures aliphatiques, par exemple le pentane, l'hexane, l'heptane, le pentaméthylheptane et les fractions de distillation du pétrole, les hydrocarbures aromatiques, par exemple le benzène, le toluène et l'ortho- le para- ou le méta-xylène, les hydrocarbures aliphatiques ou aromatiques halogénés, par exemple le tétracholoéthylène, et les éthers, par exemple le tétrahydrofurane et le dioxane. Alternativement, dans le cas où le composé insaturé (B) ou le composé siloxane (A) est sous forme liquide à la température de la réaction d'hydrosilylation, il peut être envisagé d'utiliser ce composé comme solvant de la réaction. Le milieu réactionnel peut alors avantageusement être sans solvant.

Le composé insaturé (B), le composé siloxane (A) et le catalyseur peuvent être mis en contact dans une même phase, en formant alors un milieu réactionnel homogène, ou bien être dans des phases différentes.

Selon un premier mode de réalisation, le procédé d'hydrosilylation selon l'invention est réalisé en solution homogène. Les réactifs, c'est-à-dire le composé insaturé (B) et le composé siloxane (A), et le photocatalyseur peuvent être mis en solution dans un solvant choisi de façon convenable pour solubiliser l'ensemble des composés. Ce solvant est de préférence un solvant organique ou un mélange de plusieurs solvants organiques. Ce solvant peut être choisi dans le groupe constitué par l'acétonitrile, le dichloroéthane, le nitrométhane, le 2-méthyl-tétrahydrofurane, le diméthylformamide, le diméthylsulfoxyde, le N-méthylpyrrolidone et leurs mélanges. Le solvant est de préférence choisi parmi l'acétonitrile et les mélanges d'acétonitrile et d'un autre ou de plusieurs autres co-solvant(s) organique(s). Le ou les co-solvant(s) organique(s) peut (peuvent) être choisi(s) parmi le toluène, le dichlorométhane et le tétrahydrofurane. Lorsqu'un ou plusieurs co-solvant(s) est (sont) utilisé(s) en mélange avec l'acétonitrile, le rapport volumique du (des) co-solvant(s) par rapport à l'acétonitrile est de préférence compris entre 1:10 et 6:1, et de façon plus préférée entre 3:1 et 4:1. L'utilisation de l'acétonitrile seul comme solvant de la réaction présente l'avantage d'obtenir un milieu réactionnel parfaitement homogène. Toutefois, l'acétonitrile ayant un coût élevé, l'utilisation d'un co-solvant avec l'acétonitrile peut également être considéré comme avantageuse car elle permet de réduire le volume d'acétonitrile nécessaire, et ainsi de diminuer les coûts.

Selon un second mode de réalisation, le procédé d'hydrosilylation est réalisé par catalyse hétérogène. Dans ce mode de réalisation, les réactifs, c'est-à-dire le composé insaturé (B) et le composé siloxane (A), peuvent être mis en solution dans un solvant choisi de façon convenable pour solubiliser ces réactifs, mais pas le photocatalyseur. Celui-ci peut rester sous forme solide. La catalyse hétérogène est particulièrement avantageuse car elle permet une séparation facile du catalyseur avec les réactifs et produits de la réaction, et un recyclage facile du catalyseur. Le solvant de la phase réactionnelle est de préférence un solvant organique ou un mélange de plusieurs solvants organiques. Le solvant est de préférence le toluène.

Dans ce second mode de réalisation du procédé d'hydrosilylation par catalyse hétérogène, le photocatalyseur selon l'invention peut éventuellement être introduit dans un milieu solide dispersant. Différentes techniques sont connues de l'homme du métier. Par exemple, le photocatalyseur peut être imprégné sur un support solide, immobilisé dans un réseau de silice, fixé sur une silice préalablement fonctionnalisée, fixée sur une résine échangeuse d'ions ou fixé dans une membrane polymère.

Que la réaction soit effectuée en catalyse homogène ou hétérogène, le catalyseur selon l'invention est introduit dans le milieu réactionnel à une concentration de façon préférée comprise entre 0,01% et 50%, de façon plus préférée entre 0,05% et 5%, et de façon encore plus préférée entre 1% et 2%, la concentration en catalyseur étant exprimée en pourcentage molaires de catalyseur par rapport au réactif en défaut dans la réaction d'hydrosilylation qui peut être le réactif siloxane (A) ou le réactif insaturé (B).

D'après les équations réactionnelles (1) et (2) ci-avant, le rapport stoechiométrique de la réaction d'hydrosilylation est de 1 mole de composé siloxane (A) pour 1 mole de composé insaturé (B). Toutefois, ce rapport stoechiométrique peut varier dans les cas où le composé siloxane (A) et/ou le composé insaturé (B) comprennent plus d'une fonction réactive. Dans le procédé selon l'invention, le rapport molaire des fonctions Si-H des composés siloxanes (A) sur les fonctions alcènes et alcynes des composés insaturés (B) est compris de façon préférée entre 1:100 et 100:1. Le choix de ce rapport molaire peut permettre de contrôler l'avancement de la réaction d'hydrosilylation.

Lorsque le rapport molaire des fonctions Si-H des composés siloxanes (A) sur les fonctions alcènes et alcynes des composés insaturés (B) est strictement inférieur à 1, les fonctions Si-H sont en défaut par rapport aux fonctions insaturés. Si la réaction d'hydrosilylation est totale, le produit de la réaction ne doit plus contenir de fonctions Si-H. Lorsque la réaction d'hydrosilylation est conduite entre un polyorganosiloxane comprenant au moins un motif de formule (I) et un composé organique insaturé non polymérique comme décrit ci-avant, on peut parler de fonctionnalisation totale du polyorganosiloxane.

Dans le cas inverse, lorsque le rapport molaire des fonctions Si-H des composés siloxanes (A) sur les fonctions alcènes et alcynes des composés insaturés (B) est strictement supérieur à 1, les fonctions Si-H sont en excès par rapport aux fonctions insaturés. Le produit de la réaction doit alors encore contenir de fonctions Si-H. Lorsque la réaction d'hydrosilylation est conduite entre un polyorganosiloxane comprenant au moins un motif de formule (I) et un composé organique insaturé non polymérique comme décrit ci-avant, on peut parler de fonctionnalisation partielle du polyorganosiloxane.

De telles réactions de fonctionnalisation partielle sont intéressantes d'un point de vue industriel car elles conduisent à la préparation de composés polyorganosiloxanes comprenant à la fois des motifs siloxy ayant un atome d'hydrogène lié à un atome de silicium et des motifs siloxy fonctionnalisés par des substituants organiques d'intérêt, par exemple des diméthyl-vinylmétyl-hydrogénométhyl-polysiloxanes.

Or actuellement, la préparation de tels composés par hydrosilylation catalysée avec les catalyseurs classiques au platine est problématique. Lorsque la réaction d'hydrosilylation est finie et lorsque le milieu réactionnel est laissé à l'air, le platine présent dans le milieu réactionnel peut catalyser des réactions secondaires. Il s'agit notamment de réactions de deshydrogénocondensation entre des motifs Si-H et l'eau issue de l'air. Cette réaction est à l'origine d'une gélification de la surface du milieu réactionnel et s'accompagne d'une libération de dihydrogène H₂ avec les risques d'explosion qui en découlent. La composition obtenue ne peut donc être stockée que difficilement. Il est actuellement très difficile de retirer du milieu réactionnel toute trace de catalyseur au platine après la réaction d'hydrosilylation car, même si la réaction est conduite avec des catalyseurs hétérogènes, ceux-ci relarguent généralement du platine en phase homogène dans les milieux réactionnels.

Dans ce contexte, l'utilisation d'un photocatalyseur de type POM comme dans le procédé d'hydrosilylation selon la présente invention peut permettre avantageusement de résoudre ce problème de réaction secondaire de l'art antérieur. En effet, le photocatalyseur n'est actif que lorsqu'il est irradié. En arrêtant l'irradiation, on évite toute réaction secondaire parasite. Les compositions obtenues par fonctionnalisation partielle à l'aide de la réaction d'hydrosilylation selon la présente invention sont avantageusement plus stables au stockage et plus sûres d'un point du vue risque industriel. Le taux de fonctionnalisation peut en outre être très facilement contrôlé.

En outre, le milieu réactionnel peut éventuellement être dégazé, de façon à être dépourvu d'oxygène. L'étape optionnelle de dégazage peut permettre d'améliorer la cinétique de la réaction, en particulier dans les cas où les réactifs sont des composés sensibles à l'air.

Pour promouvoir la réaction d'hydrosilylation, le photocatalyseur selon l'invention doit être excité à l'aide d'une source lumineuse. Le procédé selon l'invention comprend de préférence au moins une étape consistant à irradier le photocatalyseur avec une lumière UV ou visible. Cette irradiation peut être effectuée à l'aide de tout dispositif existant, délivrant une lumière à la longueur d'onde souhaitée. Il peut s'agir classiquement d'une lampe à incandescence, d'une lampe à LED, d'une lampe à décharge, notamment à décharge de mercure et de xénon, ou d'une lampe fluorescente. Il peut également s'agit d'une source laser. L'irradiation est de préférence effectuée à une longueur d'onde comprise entre 300 nm et 500 nm, de façon plus préférence entre 300 nm et 420 nm, et de façon encore plus préférée entre 350 nm et 400 nm. L'énergie de l'irradiation est de préférence comprise entre 1 mW/cm² et 5 W/cm², de façon plus préférée entre 1 mW/cm² et 200 mW/cm², et de façon encore plus préférée entre 10 mW/cm² et 100 mW/cm².

Selon un mode de réalisation, l'irradiation peut être maintenue constante durant toute la durée de la réaction d'hydrosilylation. Selon un mode de réalisation alternatif, l'irradiation peut être modifiée ou interrompue pendant la réaction d'hydrosilylation. Selon un autre mode de réalisation alternatif, l'irradiation peut être hachée, ce qui signifie que l'irradiation suit un cycle de marche/arrêt, selon une fréquence constante ou variable.

Le procédé d'hydrosilylation peut être réalisé à une température entre 0°C et 150°C, de préférence entre 10°C et 30°C, et de façon plus préférée à température ambiante. Pour la mesure de la température de la réaction d'hydrosilylation dans la présente invention, on ne tient pas compte du chauffage qui peut éventuellement être produit par la source d'irradiation. Ce procédé est conduit avantageusement à pression atmosphérique, mais il est envisageable de mettre en oeuvre ce procédé en sous-pression, par exemple entre 0,01 MPa (100 mbar) et 0,08 MPa (800 mbar), ou en sur-pression, par exemple entre 0,1 MPa (1 bar) et 8 MPa (80 bars).

Le procédé d'hydrosilylation selon l'invention peut être un procédé discontinu, couramment appelé de type batch selon la terminologie anglo-saxonne. La réaction peut être conduite pendant une durée qui varie en fonction des réactifs mis en jeu, du catalyseur utilisé et des conditions réactionnelles, en particulier en fonction des concentrations de réactifs et de catalyseur. De façon générale, la durée de la réaction peut être comprise entre 1 minute et 24 heures, de façon préférée entre 30 minutes et 8 heures, et de façon encore plus préférée entre 1 heure et 4 heures.

Cependant, il est également envisagé de mettre en oeuvre le procédé selon l'invention en continu. Selon ce mode de réalisation, les réactifs sont introduits dans le réacteur sous la forme d'un ou de plusieurs flux continus. Le photocatalyseur peut, quant à lui, circuler également en flux continu dans le réacteur, en particulier si le procédé est réalisé dans une solution homogène. Dans le cas d'une catalyse hétérogène, il peut être fixé à l'intérieur du réacteur, par exemple sous la forme d'un lit catalytique fixe ou d'un lit catalytique mobile. Lorsque le procédé selon l'invention est un procédé continu, le débit des flux circulant dans le réacteur peuvent être fixés par l'homme du métier en fonction du volume du réacteur de façon à assurer un temps de résidence des réactifs suffisants, en présence du photocatalyseur, pour que la réaction d'hydrosilylation soit effectuée.

Les inventeurs ont découvert que, de façon avantageuse, l'utilisation du photocatalyseur selon l'invention permettait d'effectuer des réactions d'hydrosilylation dans des conditions opératoires faciles à mettre en oeuvre, sans composés particulièrement dangereux ni coûteux, avec des taux de conversion tout à fait intéressants. Les taux de conversions de réactif siloxane (A) et/ou de réactif insaturé (B) peuvent avantageusement être supérieurs à 50%, voire 60%, voire 75%, voire 80%, voire 90%, et de préférence compris entre 90 et 100%.

Dans la présente demande, les termes « taux de conversion » et « taux de transformation », en abrégé TT, sont synonymes et désignent, pour chaque réactif, en pourcent, le nombre initial de moles de fonctions Si-H du réactif siloxane (A) ou de fonctions alcènes et alcynes du réactif insaturé (B), moins le nombre de moles de ces fonctions restantes après réaction, divisé par le nombre initial de moles de ces fonctions.

Les produits obtenus par le procédé selon l'invention peuvent éventuellement, lors d'une étape ultérieure, être purifiés à l'aide des moyens classiques bien connu de l'homme du métier. Les produits peuvent par exemple être purifiés par chromatographie éclair sur gel de silice.

La présente invention a également pour objet un moyen spécialement conçu pour la mise en oeuvre du procédé d'hydrosilylation décrit ci-avant. Ce moyen consiste en une composition comprenant :
- un composé siloxane (A) comprenant au moins un atome d'hydrogène lié à un atome de silicium,
- un composé insaturé (B) comprenant au moins une fonction alcène et/ou au moins une fonction alcyne, et
- un photocatalyseur choisi parmi les polyoxométallates.

Cette composition forme le milieu réactionnel dans lequel la réaction d'hydrosilylation photocatalysée selon l'invention peut intervenir. Pour ce faire, cette composition peut être irradiée comme décrit ci-avant, ce qui va avoir pour effet d'activer le photocatalyseur et permettre la réaction entre le composé insaturé (B) et le composé siloxane (A).

De préférence, le composé insaturé (B), le composé siloxane (A) et le photocatalyseur sont tels que décrits ci-avant dans la présente demande.

Selon un premier mode de réalisation, la composition selon l'invention peut être une solution. Dans ce cas, le procédé d'hydrosilylation peut avoir lieu en solution homogène. La composition comprend de préférence un solvant qui peut être choisi comme décrit ci-avant dans le cas d'un procédé d'hydrosilylation en solution homogène.

Selon un second mode de réalisation, la composition selon l'invention peut être une suspension. De préférence, le composé insaturé (B) et le composé siloxane (A) forment un milieu réactionnel homogène dans un solvant dans lequel le photocatalyseur n'est pas soluble. Dans ce cas, le procédé d'hydrosilylation peut être un procédé par catalyse hétérogène. La composition comprend de préférence un solvant qui peut être choisi comme décrit ci-avant dans le cas d'un procédé d'hydrosilylation par catalyse hétérogène. Le photocatalyseur peut éventuellement être introduit dans un milieu solide dispersant, comme décrit précédemment.

La concentration en photocatalyseur dans la composition selon l'invention est comprise de façon préférée entre 0,01% et 50%, de façon plus préférée entre 0,05% et 5%, et de façon encore plus préférée entre 1% et 2%, la concentration en catalyseur étant exprimée en pourcentage molaires de catalyseur par rapport au réactif qui est en défaut dans la réaction d'hydrosilylation, qui peut être le réactif siloxane (A) ou le réactif insaturé (B).

En outre, le rapport molaire des fonctions Si-H des composés siloxanes (A) sur les fonctions alcènes et alcynes des composés insaturés (B) est compris de façon préférée entre 1:100 et 100:1. Selon un mode de réalisation, le rapport molaire des fonctions Si-H des composés siloxanes (A) sur les fonctions alcènes et alcynes des composés insaturés (B) est strictement inférieur à 1. Les fonctions Si-H sont en défaut par rapport aux fonctions insaturées. Selon un autre mode de réalisation, le rapport molaire des fonctions Si-H des composés siloxanes (A) sur les fonctions alcènes et alcynes des composés insaturés (B) est strictement supérieur à 1. Les fonctions Si-H sont alors en excès par rapport aux fonctions insaturés.

La composition selon l'invention peut éventuellement comprendre des additifs. Ces additifs peuvent notamment être choisis parmi les photosensibilisateurs. Des photosensibilisateurs pouvant être utilisés comme additifs dans la présente invention sont décrits dans les documents de brevet EP 1 133 971 et EP 1 745 083. Les photosensibilisateurs sont préférentiellement choisis dans le groupe constitué par les cétones, notamment les cétones aromatiques, les colorants coumarines, les colorants xanthènes, les xanthones, les thioxanthones, les colorants acridines, les colorants thiazoles, les colorants thiazines, les colorants oxazines, les colorants azines, des colorants aminocétones, les porphyrines, les hydrocarbures aromatiques polycycliques tels que les naphtalènes, les anthracènes, des phénanthrène, les pyrènes, les fluorènes, les fluoranthènes et les chrisènes, les composés cétones substituées en para par un groupe aminostyryl, les amino-triaryl-méthanes, les mérocyanines, les colorants squarylium et les colorants pyridiums. Les photosensibilisateurs de type cétone particulièrement préférés sont la camphorquinone, la benzophénone et la thioxanthone. La composition selon l'invention peut en outre comprendre, en tant qu'additif, des composés donneurs d'électrons, tels que par exemple ceux décrits dans le document de brevet EP 1 133 971. Toutefois, la concentration en additif dans la composition selon l'invention est avantageusement inférieure à 1000 ppm en poids par rapport au poids total de la composition, et de façon plus préférée comprise entre 0 et 300 ppm.

### EXEMPLES

### Synthèse du décatungstate de tétrabutylammonium (TBADT)

Le bromure de tétrabutylammonium (10,7 g) et le tungstate de sodium dihydraté (22,2 g) ont été dissous séparément dans 600 mL d'eau dans deux Erlenmeyers et portés à 90°C sous agitation vigoureuse. Le pH de chaque solution a été ajusté à 2, de façon contrôlée, par ajout goutte à goutte d'acide chlorhydrique concentré (la solution de tungstate de sodium prend alors une légère coloration verte). Les deux solutions ont ensuite été mélangées et maintenues à 90°C pendant 1 heure 30 minutes. Une suspension blanche de TBADT s'est formée, et a été laissée refroidir à température ambiante puis filtrée sur verre fritté (porosité n°4). Le solide a été lavé à l'eau et séché à l'étuve à 110°C pendant une nuit. Après retour à température ambiante, le solide blanc a été broyé au mortier pour conduire au TBADT (20,3 g, 91%) sous l'apparence d'une fine poudre blanche. La pureté a été évaluée à plus de 80% par spectrométrie UV (ε₃₂₃ = 1,35 x 10⁴ dm³.mol⁻¹.cm⁻¹ dans l'acétonitrile).

Le spectre d'absorption du TBADT synthétisé a été obtenu dans l'acétonitrile à l'aide du spectromètre UV-visible JASCO V530. Le spectre d'absorption est reproduit en figure 1.

Exemple 1 : Hydrosilylation de l'acrylate d'éthyle avec un siloxane dans l'acétonitrile Dans un ballon équipé d'un barreau magnétique, d'une entrée d'argon ou d'azote et d'un septum, ont été introduits successivement du TBADT (10 mol%), du 1,1,1,3,5,5,5-heptaméthyltrisiloxane (1,5 équiv.) de formule (VIII) : 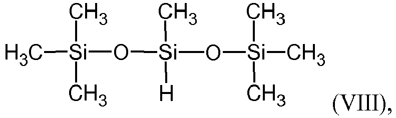 de l'acétonitrile sec dégazé (par trois cycles successifs de congélation/vide/fusion) et de l'acrylate d'éthyle (1 équiv.).

Le milieu réactionnel a été irradié avec une lampe UV (Omnicure série 1000) émettant dans l'UV à 365 nm, à une énergie égale à 20% de l'énergie maximale de la lampe de 270 mW/cm² pendant 3 heures. Une fois la réaction achevée, les solvants ont été évaporés sous pression réduite. La RMN du proton du brut réactionnel permet d'estimer le taux de conversion. Le brut réactionnel a été ensuite purifié par chromatographie éclair sur gel de silice.

Le taux de conversion et le rendement relatif de la réaction ont été mesurés par analyse RMN ¹H 300 MHz.

Le composé de formule (XI) : 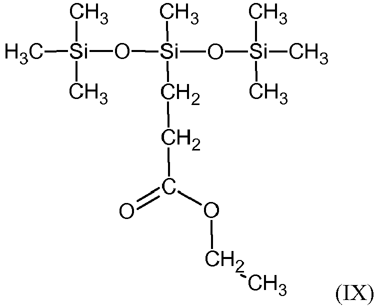 a été obtenu avec un taux de conversion de 84% et un rendement de 10%.

Le rendement désigne ici, en pourcent, le nombre de moles de produit (IX) obtenu après réaction divisé par le nombre initial de moles d'acrylate d'éthyle.

## Revendications

1. Procédé d'hydrosilylation entre un composé siloxane (A) comprenant au moins un atome d'hydrogène lié à un atome de silicium et un composé insaturé (B) comprenant au moins une fonction alcène et/ou au moins une fonction alcyne, ledit procédé étant **caractérisé par le fait qu'**il est catalysé par un photocatalyseur choisi parmi les polyoxométallates.

2. Procédé selon la revendication 1, **caractérisé en ce que** ledit photocatalyseur est un décatungstate.

3. Procédé selon l'une ou l'autre des revendications 1 et 2, **caractérisé en ce que** ledit composé siloxane (A) est un polyorganosiloxane comprenant au moins un motif de formule (I) :
H_{d}ZₑSiO_{(4-(d+e))/2} (I)
dans laquelle :
- Z représente un radical monovalent différent d'un atome d'hydrogène,
- d et e représentent des nombres entiers, d valant 1 ou 2, e valant 0, 1 ou 2 et (d+e) valant 1, 2 ou 3 ;
et éventuellement d'autres motifs de formule (II) :
Z_{f}SiO_{(4-f)/2} (II)
dans laquelle :
- Z a la même signification que ci-dessus, et
- f représente un nombre entier compris entre 0 et 3.

4. Procédé selon la revendication 3, **caractérisé en ce que**, dans la formule (I), le symbole d vaut 1 et Z représente un radical monovalent choisi dans le groupe constitué par un groupe alkyle ayant 1 à 8 atomes de carbone, éventuellement substitué par au moins un atome d'halogène, et un groupe aryle.

5. Procédé selon l'une quelconque des revendications 1 à 4, **caractérisé en ce que** ledit composé insaturé (B) comprend une ou plusieurs fonctions alcène et/ou une ou plusieurs fonctions alcyne, et de 2 à 40 atomes de carbone.

6. Procédé selon l'une quelconque des revendications 1 à 5, **caractérisé en ce que** ledit composé insaturé (B) est choisi dans le groupe constitué par :
- les composés organiques insaturés non polymériques,
- les composés polyorganosiloxanes comprenant au moins une fonction alcène et/ou au moins une fonction alcyne,
et leurs mélanges.

7. Procédé selon la revendication 6, **caractérisé en ce que** ledit composé insaturé (B) est un composé organique insaturé non polymérique choisi dans le groupe constitué par choisi dans le groupe constitué par :
- l'acétylène ;
- les acrylates et les méthacrytales d'alkyles en C₁ à C₄ ;
- l'acide acrylique ou méthacrylique ;
- les alcènes, de préférence l'octène et plus préférentiellement le 1-octène ;
- l'alcool allylique ;
- l'allylamine ;
- l'éther d'allyle et glycidyle ;
- l'éther d'allyle et de pipéridine, préférentiellement l'éther d'allyle et de pipéridine stériquement encombrée ;
- les styrènes, préférentiellement l'alpha-méthyl-styrène,
- le 1,2-époxy-4-vinylcyclohexane.
- le chlorure d'allyle ;
- les alcènes chlorés, de préférence le chlorure d'allyle ; et
- les alcènes fluorés, de préférence de 4,4,5,5,6,6,7,7,7-nonafluoro-1-heptène.

8. Procédé selon la revendication 6, **caractérisé en ce que** ledit composé insaturé (B) est choisi parmi les composés polyorganosiloxanes comprenant au moins un motif de formule (V) :
Y_{g}LₕSiO_{(4-(g+h))/2} (V)
dans laquelle :
- Y représente un radical linéaire ou ramifié contenant entre 2 et 12 atomes de carbone, ayant au moins une fonction alcène et/ou au moins une fonction alcyne, et éventuellement au moins un hétéroatome,
- L représente un radical monovalent ne comprenant pas de fonction alcène ou alcyne ;
- g et h représentent des nombres entiers, g valant 1, 2 ou 3, h valant 0, 1 ou 2 et (g+h) valant 1, 2 ou 3 ;
et comportant éventuellement d'autres motifs de formule (VI) :
LᵢSiO_{(4-i)/2} (VI)
dans laquelle :
- L a la même signification que ci-dessus, et
- i représente un nombre entier compris entre 0 et 3.

9. Procédé selon l'une quelconque des revendications 1 à 8, **caractérisé en ce que** le composé siloxane (A) comprenant au moins un atome d'hydrogène lié à un atome de silicium et le composé insaturé (B) comprenant au moins une fonction alcène et/ou au moins une fonction alcyne sont un seul et même composé bifonctionnel.

10. Procédé selon la revendication 9, **caractérisé en ce que** ledit composé bifonctionnel est un polyorganosiloxane comprenant au moins un motif de formule (I) :
H_{d}ZₑSiO_{(4-(d+e))/2} (I)
dans laquelle :
- Z représente un radical monovalent différent d'un atome d'hydrogène,
- d et e représentent des nombres entiers, d valant 1 ou 2, e valant 0, 1 ou 2 et (d+e) valant 1, 2 ou 3 ;
et au moins un motif de formule (V) :
Y_{g}LₕSiO_{(4-(g+h))/2} (V)
dans laquelle :
- Y représente un radical linéaire ou ramifié contenant entre 2 et 12 atomes de carbone, ayant au moins une fonction alcène et/ou au moins une fonction alcyne, et éventuellement au moins un hétéroatome,
- L représente un radical monovalent ne comprenant pas de fonction alcène ou alcyne,
- g et h représentent des nombres entiers, g valant 1, 2 ou 3, h valant 0, 1 ou 2 et (g+h) valant 1, 2 ou 3 ;
et éventuellement d'autres motifs de formule (VII) :
WⱼSiO_{(4-d)/2} (VII)
dans laquelle :
- W représente un radical monovalent différent d'un atome d'hydrogène et ne comprenant pas de fonction alcène ou alcyne, et
- j représente un nombre entier compris entre 0 et 3.

11. Procédé selon l'une quelconque des revendications 1 à 10, **caractérisé en ce qu'**il comprend une étape consistant à irradier le photocatalyseur avec une lumière UV ou visible dont la longueur d'onde comprise entre comprises entre 300 nm et 500 nm.

12. Procédé selon l'une quelconque des revendications 1 à 11, **caractérisé en ce qu'**il est réalisé en solution homogène.

13. Procédé selon l'une quelconque des revendications 1 à 11, **caractérisé en ce qu'**il est réalisé par catalyse hétérogène.

14. Composition comprenant :
- un composé siloxane (A) comprenant au moins un atome d'hydrogène lié à un atome de silicium,
- un composé insaturé (B) comprenant au moins une fonction alcène et/ou au moins une fonction alcyne, et
- un photocatalyseur choisi parmi les polyoxométallates.

15. Utilisation d'un polyoxométallate, de préférence d'un décatungstate, comme photocatalyseur d'une réaction d'hydrosilylation d'un composé insaturé comprenant au moins une fonction alcène et/ou au moins une fonction alcyne, avec un composé siloxane comprenant au moins un atome d'hydrogène lié à un atome de silicium.

## Patentansprüche

1. Verfahren zur Hydrosilylierung zwischen einer Siloxanverbindung (A) mit mindestens einem an ein Siliciumatom gebundenen Wasserstoffatom und einer ungesättigten Verbindung (B) mit mindestens einer Alkenfunktion und/oder mindestens einer Alkinfunktion, wobei das Verfahren **dadurch gekennzeichnet ist, dass** es durch einen aus Polyoxometallaten ausgewählten Photokatalysator katalysiert wird.

2. Verfahren nach Anspruch 1, **dadurch gekennzeichnet, dass** es sich bei dem Photokatalysator um ein Decawolframat handelt.

3. Verfahren nach Anspruch 1 oder 2, **dadurch gekennzeichnet, dass** es sich bei der Siloxanverbindung (A) um ein Polyorganosiloxan mit mindestens einer Einheit der Formel (I):
H_{d}ZₑSiO_{(4-(d+e))/2} (I)
in der:
- Z für einen einwertigen Rest, der von einem Wasserstoffatom verschieden ist, steht,
- d und e für ganze Zahlen stehen, wobei d gleich 1 oder 2 ist, e gleich 0, 1 oder 2 ist und (d+e) gleich 1, 2 oder 3 ist;
und gegebenenfalls anderen Einheiten der Formel (II) :
Z_{f}SiO_{(4-f)/2} (II)
in der:
- Z die gleiche Bedeutung wie oben hat und
- f für eine ganze Zahl zwischen 0 und 3 steht; handelt.

4. Verfahren nach Anspruch 3, **dadurch gekennzeichnet, dass** in Formel (I) das Symbol d gleich 1 ist und Z für einen einwertigen Rest aus der Gruppe bestehend aus einer Alkylgruppe mit 1 bis 8 Kohlenstoffatomen, die gegebenenfalls durch mindestens ein Halogenatom substituiert ist, und einer Arylgruppe steht.

5. Verfahren nach einem der Ansprüche 1 bis 4, **dadurch gekennzeichnet, dass** die ungesättigte Verbindung (B) eine oder mehrere Alkenfunktionen und/oder eine oder mehrere Alkinfunktionen und 2 bis 40 Kohlenstoffatome aufweist.

6. Verfahren nach einem der Ansprüche 1 bis 5, **dadurch gekennzeichnet, dass** die ungesättigte Verbindung (B) aus der Gruppe bestehend aus:
- nichtpolymeren ungesättigten organischen Verbindungen,
- Polyorganosiloxanverbindungen mit mindestens einer Alkenfunktion und/oder mindestens einer Alkinfunktion
und Mischungen davon ausgewählt wird.

7. Verfahren nach Anspruch 6, **dadurch gekennzeichnet, dass** es sich bei der ungesättigten Verbindung (B) um eine nichtpolymere ungesättigte organische Verbindung aus der Gruppe bestehend aus:
- Acetylen;
- C₁- bis C₄-Alkylacrylaten und -methacrylaten;
- Acryl- oder Methacrylsäure;
- Alkenen, vorzugsweise Octen und weiter bevorzugt 1-Octen;
- Allylalkohol;
- Allylamin;
- Allylglycidylether;
- Piperidinallylether, bevorzugt sterisch gehindertem Piperidinallylether;
- Styrolen, bevorzugt alpha-Methylstyrol,
- 1,2-Epoxy-4-vinylcyclohexan,
- Allylchlorid;
- Chloralkenen, vorzugsweise Allylchlorid und
- Fluoralkenen, vorzugsweise 4,4,5,5,6,6,7,7,7-Nonafluor-1-hepten,
handelt.

8. Verfahren nach Anspruch 6, **dadurch gekennzeichnet, dass** die ungesättigte Verbindung (B) aus Polyorganosiloxanverbindungen mit mindestens einer Einheit der Formel (V):
Y_{g}LₕSiO_{(4-(g+h))/2} (V)
in der:
- Y für einen linearen oder verzweigten Rest mit zwischen 2 und 12 Kohlenstoffatomen, mindestens einer Alkenfunktion und/oder mindestens einer Alkinfunktion und gegebenenfalls mindestens einem Heteroatom steht;
- L für einen einwertigen Rest, der keine Alken- oder Alkinfunktion aufweist, steht;
- g und h für ganze Zahlen stehen, wobei g gleich 1, 2 oder 3 ist, h gleich 0, 1 oder 2 ist und (g+h) gleich 1, 2 oder 3 ist;
und gegebenenfalls weiteren Einheiten der Formel (VI):
LᵢSiO_{(4-i)/2} (VI)
in der:
- L die gleiche Bedeutung wie oben hat und
- i für eine ganze Zahl zwischen 0 und 3 steht;
ausgewählt wird.

9. Verfahren nach einem der Ansprüche 1 bis 8, **dadurch gekennzeichnet, dass** es sich bei der Siloxanverbindung (A) mit mindestens einem an ein Siliciumatom gebundenen Wasserstoffatom und der ungesättigten Verbindung (B) mit mindestens einer Alkenfunktion und/oder mindestens einer Alkinfunktion um ein und dieselbe bifunktionelle Verbindung handelt.

10. Verfahren nach Anspruch 9, **dadurch gekennzeichnet, dass** es sich bei der bifunktionellen Verbindung um ein Polyorganosiloxan mit mindestens einer Einheit der Formel (I):
H_{d}ZₑSiO_{(4-(d+e))/2} (I)
in der:
- Z für einen einwertigen Rest, der von einem Wasserstoffatom verschieden ist, steht;
- d und e für ganze Zahlen stehen, wobei d gleich 1 oder 2 ist, e gleich 0, 1 oder 2 ist und (d+e) gleich 1, 2 oder 3 ist;
und mindestens einer Einheit der Formel (V):
Y_{g}LₕSiO_{(4-(g+h))/2} (V)
in der:
- Y für einen linearen oder verzweigten Rest mit zwischen 2 und 12 Kohlenstoffatomen, mindestens einer Alkenfunktion und/oder mindestens einer Alkinfunktion und gegebenenfalls mindestens einem Heteroatom steht;
- L für einen einwertigen Rest, der keine Alken- oder Alkinfunktion aufweist, steht;
- g und h für ganze Zahlen stehen, wobei g gleich 1, 2 oder 3 ist, h gleich 0, 1 oder 2 ist und (g+h) gleich 1, 2 oder 3 ist;
und gegebenenfalls anderen Einheiten der Formel (VII) :
WⱼSiO_{(4-d)/2} (VII)
in der:
- W für einen einwertigen Rest, der von einem Wasserstoffatom verschieden ist und keine Alken- oder Alkinfunktion aufweist, steht und
- j für eine ganze Zahl zwischen 0 und 3 steht;
handelt.

11. Verfahren nach einem der Ansprüche 1 bis 10, **dadurch gekennzeichnet, dass** es einen Schritt umfasst, der darin besteht, dass man den Photokatalysator mit UV-Licht oder sichtbarem Licht mit einer Wellenlänge zwischen 300 nm und 500 nm bestrahlt.

12. Verfahren nach einem der Ansprüche 1 bis 11, **dadurch gekennzeichnet, dass** es in homogener Lösung durchgeführt wird.

13. Verfahren nach einem der Ansprüche 1 bis 11, **dadurch gekennzeichnet, dass** es durch heterogene Katalyse durchgeführt wird.

14. Zusammensetzung, umfassend:
- eine Siloxanverbindung (A) mit mindestens einem an ein Siliciumatom gebundenen Wasserstoffatom,
- eine ungesättigte Verbindung (B) mit mindestens einer Alkenfunktion und/oder mindestens einer Alkinfunktion und
- einen aus Polyoxometallaten ausgewählten Photokatalysator.

15. Verwendung eines Polyoxometallats, vorzugsweise eines Decawolframats, als Photokatalysator einer Hydrosilylierungsreaktion einer ungesättigten Verbindung mit mindestens einer Alkenfunktion und/oder mindestens einer Alkinfunktion mit einer Siloxanverbindung mit mindestens einem an ein Siliciumatom gebundenen Wasserstoffatom.

## Claims

1. Process for hydrosilylation between a siloxane compound (A) comprising at least one hydrogen atom bonded to a silicon atom and an unsaturated compound (B) comprising at least one alkene function and/or at least one alkyne function, said process being **characterized in that** it is catalyzed by a photocatalyst chosen from polyoxometalates.

2. Process according to Claim 1, **characterized in that** said photocatalyst is a decatungstate.

3. Process according to either of Claims 1 and 2, **characterized in that** said siloxane compound (A) is a polyorganosiloxane comprising at least one unit of formula (I):
H_{d}ZₑSiO_{(4-(d+e))/2} (I)
in which:
- Z represents a monovalent radical other than a hydrogen atom,
- d and e represent integers, d being 1 or 2, e being 0, 1 or 2 and (d+e) being 1, 2 or 3;
and optionally other units of formula (II):
Z_{f}SiO_{(4-f)/2} (II)
in which:
- Z has the same meaning as above, and
- f represents an integer between 0 and 3.

4. Process according to Claim 3, **characterized in that**, in formula (I), the symbol d is 1 and Z represents a monovalent radical chosen from the group consisting of an alkyl group having 1 to 8 carbon atoms, which is optionally substituted with at least one halogen atom, and an aryl group.

5. Process according to any one of Claims 1 to 4, **characterized in that** said unsaturated compound (B) comprises one or more alkene functions and/or one or more alkyne functions, and from 2 to 40 carbon atoms.

6. Process according to any one of Claims 1 to 5, **characterized in that** said unsaturated compound (B) is chosen from the group consisting of:
- non-polymeric unsaturated organic compounds,
- polyorganosiloxane compounds comprising at least one alkene function and/or at least one alkyne function,
and mixtures thereof.

7. Process according to Claim 6, **characterized in that** said unsaturated compound (B) is a non-polymeric unsaturated organic compound chosen from the group consisting of:
- acetylene;
- C₁ to C₄ alkyl acrylates and methacrylates;
- acrylic or methacrylic acid;
- alkenes, preferably octene and more preferentially 1-octene;
- allyl alcohol;
- allylamine;
- allyl glycidyl ether;
- piperidine allyl ether, preferentially sterically hindered piperidine allyl ether;
- styrenes, preferentially alpha-methylstyrene,
- 1,2-epoxy-4-vinylcyclohexane,
- allyl chloride;
- chloroalkenes, preferably allyl chloride; and
- fluoroalkenes, preferably 4,4,5,5,6,6,7,7,7-nonafluoro-1-heptene.

8. Process according to Claim 6, **characterized in that** said unsaturated compound (B) is chosen from polyorganosiloxane compounds comprising at least one unit of formula (V):
Y_{g}LₕSiO_{(4-(g+h))/2} (V)
in which:
- Y represents a linear or branched radical containing between 2 and 12 carbon atoms, having at least one alkene function and/or at least one alkyne function, and optionally at least one heteroatom;
- L represents a monovalent radical not comprising an alkene or alkyne function;
- g and h represent integers, g being 1, 2 or 3, h being 0, 1 or 2 and (g+h) being 1, 2 or 3;
and optionally comprising other units of formula (VI):
LᵢSiO_{(4-i)/2} (VI)
in which:
- L has the same meaning as above, and
- i represents an integer between 0 and 3.

9. Process according to any one of Claims 1 to 8, **characterized in that** the siloxane compound (A) comprising at least one hydrogen atom bonded to a silicon atom and the unsaturated compound (B) comprising at least one alkene function and/or at least one alkyne function are one and the same bifunctional compound.

10. Process according to Claim 9, **characterized in that** said bifunctional compound is a polyorganosiloxane comprising at least one unit of formula (I):
H_{d}ZₑSiO_{(4-(d+e)))/2} (I)
in which:
- Z represents a monovalent radical other than a hydrogen atom;
- d and e represent integers, d being 1 or 2, e being 0, 1 or 2 and (d+e) being 1, 2 or 3;
and at least one unit of formula (V):
Y_{g}LₕSiO_{(4-(g+h))/2} (V)
in which:
- Y represents a linear or branched radical containing between 2 and 12 carbon atoms, having at least one alkene function and/or at least one alkyne function, and optionally at least one heteroatom;
- L represents a monovalent radical not comprising an alkene or alkyne function;
- g and h represent integers, g being 1, 2 or 3, h being 0, 1 or 2 and (g+h) being 1, 2 or 3;
and optionally other units of formula (VII):
WⱼSiO_{(4-d)/2} (VII)
in which:
- W represents a monovalent radical other than a hydrogen atom and not comprising an alkene or alkyne function, and
- j represents an integer between 0 and 3.

11. Process according to any one of Claims 1 to 10, **characterized in that** it comprises a step consisting in irradiating the photocatalyst with UV or visible light, the wavelength of which is between 300 nm and 500 nm.

12. Process according to any one of Claims 1 to 11, **characterized in that** it is carried out in a homogeneous solution.

13. Process according to any one of Claims 1 to 11, **characterized in that** it is carried out by heterogeneous catalysis.

14. Composition comprising:
- a siloxane compound (A) comprising at least one hydrogen atom bonded to a silicon atom,
- an unsaturated compound (B) comprising at least one alkene function and/or at least one alkyne function, and
- a photocatalyst chosen from polyoxometalates.

15. Use of a polyoxometalate, preferably of a decatungstate, as a photocatalyst of a reaction for hydrosilylation of an unsaturated compound comprising at least one alkene function and/or at least one alkyne function, with a siloxane compound comprising at least one hydrogen atom bonded to a silicon atom.
